# EUROPÄISCHE PATENTANMELDUNG

(11) **EP 1 564 830 A2**
(43) Veröffentlichungstag der Anmeldung: **17.08.2005**
(21) Anmeldenummer: 05001170.9
(22) Anmeldetag: 21.01.2005
(51) Int. Cl.: H01M 8/04

(54) **Verfahren zur Erzeugung von Strom und Wärme**

(30) Priorität: 31.01.2004 DE 102004004914
(71) Anmelder: FORSCHUNGSZENTRUM JÜLICH GMBH, 52425 Jülich (DE)
(72) Erfinder: Richarts, Prof. Dr. Fritz, 52223 Stolberg (DE); Lokurlu, Dr. Ahmet, 52072 Aachen (DE); Blum, Prof. Dr. Ludger, 52428 Jülich (DE); Riensche, Dr. Ernst, 52428 Jülich (DE)

(57) **Zusammenfassung**

Die Erfindung betrifft ein neues Verfahren zur Erzeugung von elektrischer Energie und Wärme in einer Vorrichtung, bestehend aus einer Hochtemperaturbrennstoffzelle und einer Gasturbine, wobei die Gasturbine mit einer unter Umgebungsdruck stehenden Brennkammer arbeitet. Dies hat den Vorteil, dass die Brennstoffzelle nicht druckfest ausgestaltet sein muss. Die Gasturbine entspannt daher das ihr zugeleitete Gas in einen Unterdruck, während der Verdichter dieses unter Unterdruck stehende Gas ansaugt und wieder auf Umgebungsdruck verdichtet. Unter Umgebungsdruck sind auch gegenüber dem Umgebungsdruck leicht erhöhte Drücke bis ca. 2 bar mit umfasst. Ein der Turbine nachgeschalteter Rekuperator überträgt die Wärme des Abgases der Turbine auf die der Brennstoffzelle zugeführte Zuluft, die so ausreichend vorgewärmt wird. Ein Abzweig dieser Leitung mit vorgewärmter Zuluft wird direkt dem Abgasstrom der Brennstoffzelle zugeleitet, so dass eine variable Regulierung der Restbrennstoffkonzentration am Eingang der Brennkammer der Gasturbine erfolgen kann.

## Beschreibung

Die Erfindung betrifft ein Verfahren zur Strom- und Wärmeerzeugung, insbesondere ein Verfahren, bei dem eine Hochtemperaturbrennstoffzelle und Kombination mit einer Gasturbine eingesetzt wird.

### Stand der Technik

Die Stromerzeugung mittels chemischer Energieträger wird langfristig mittels Brennstoffzellen geschehen, da die elektrochemische Energiewandlung die höchsten Wirkungsgrade ermöglicht. Da in Hochtemperaturbrennstoffzellen ein erheblicher Anteil der eingesetzten Energie in Hochtemperaturwärme umgewandelt wird, liegt es nahe, diese in einem thermischen Prozess ebenfalls in elektrische Energie umzuwandeln und damit den gesamten Prozess in seiner Effizienz nochmals nachhaltig zu steigern. Hierzu bietet sich der Joule-Prozess an, der in offenen Gasturbinen auch in der konventionellen Kraftwerkstechnik, insbesondere in Gas-Dampf-Kombianlagen, schon seit längerem angewendet wird.

Die Kombination von Gasturbinen und Brennstoffzellen, insbesondere von Hochtemperaturbrennstoffzellen, wird zur Zeit intensiv untersucht und weiterentwickelt. Bei Diesen Konzepten wird die Gasturbine stets mit einer Brennkammer betrieben, die unter einem höheren als dem Atmosphärendruck steht. Der Verdichter saugt die Luft aus der Atmosphäre an und verdichtet sie auf einen höheren Druck. Dabei erwärmt sich die Luft. Sie wird dann der Brennstoffzelle zugeleitet. Die Brennstoffzelle hat bei höherem Druck innerhalb des Zellstapels eine höhere Zellspannung. Dadurch kann ihre Leistung gesteigert werden. Da in den Hochtemperaturbrennstoffzellen der Brennstoff nur zu einem Anteil von üblicherweise 80 % oder weniger verbrennt, bietet sich an, die Restbrennstoffmenge, die mit dem Abgas die Brennstoffzelle verlässt, in der Brennkammer der Gasturbine restlos zu verbrennen und die Temperatur des Mediums zu erhöhen.

Dieses Prinzip der Kombination von Gasturbine und Brennstoffzelle ist jedoch mit einigen erheblichen Problemen verbunden. So stellen der Überdruck und das hohe Temperaturniveau innerhalb des Zellstapels hohe Anforderungen an die Bauteile und Werkstoffe. Bei den meisten Gasturbinen ist die Temperatur der aus dem Verdichter austretenden Luft nicht hoch genug, um den Anforderungen eines optimalen Betriebs innerhalb der Brennstoffzelle zu genügen. Sie muss also vorgewärmt werden. Das schmälert den Wirkungsgrad des Gesamtsystems. Das Turbinenabgas hat meistens eine zu niedrige Temperatur, um als Wärmequelle für die Luftvorwärmung verwendet zu werden.

Daraus folgt, dass die Kombination herkömmlicher Gasturbinen mit Hochtemperaturbrennstoffzellen mit Nachteilen behaftet ist, die in der thermodynamischen Auslegung des Gasturbinenprozesses begründet sind:
- hoher Druck im Zellstapel führt regelmäßig zu konstruktiven Problemen,
- hohe Turbineneintrittstemperatur erfordert oftmals mehr Brennstoffeinsatz in der Brennkammer, als von der Brennstoffzelle durch Brennstoffschlupf geliefert wird,
- die Temperatur am Verdichteraustritt ist regelmäßig zu niedrig, üblicherweise muss die Luft durch zusätzlichen Brennstoffeinsatz aufgeheizt werden.

### Aufgabe und Lösung

Aufgabe der Erfindung ist es, ein Verfahren zur Erzeugung von Strom und Wärme bereitzustellen, welches die vorgenannten Nachteile aus dem Stand der Technik überwindet. Ferner ist es Aufgabe der Erfindung eine Vorrichtung zu schaffen, mit der das vorgenannte Verfahren durchgeführt werden kann. Die Aufgaben der Erfindung werden gelöst, durch ein Verfahren mit der Gesamtheit an Merkmalen gemäß Hauptanspruch, sowie durch ein Verfahren gemäß Nebenanspruch. Vorteilhafte Ausgestaltungen des Verfahrens und der Vorrichtung finden sich jeweils in den darauf rückbezogenen Ansprüchen wieder.

### Gegenstand der Erfindung

Das erfindungsgemäße Verfahren zur Erzeugung von Strom und Wärme basiert auf einem Verfahren, bei welchem eine Brennstoffzelle, insbesondere eine Hochtemperaturbrennstoffzelle, und eine Gasturbine miteinander gekoppelt sind. Anders als üblich wird in der Brennkammer der Gasturbine jedoch mit Luft unter Atmosphärendruck gearbeitet. Im Sinne dieser Erfindung wird Atmosphärendruck als Druck zwischen 1 und 2 bar definiert, das bedeutet auch ein leichter Überdruck soll noch mit dem Begriff Atmosphärendruck umfasst sein. Das Einstellen von Atmosphärendruck in der Brennkammer hat den Vorteil, dass die Materialanforderungen für den angekoppelten Brennstoffzellenstapel nur für Normalbedingungen und nicht für hohe Druckfestigkeit ausgelegt sein müssen.

In einer vorteilhaften Ausgestaltung des Verfahrens wird die der Brennstoffzelle zugeführte Luft zunächst durch die Abgase der Gasturbine vorgewärmt.

In einer weitere Verfahrensvariante wird das aus der Brennkammer austretende, unter atmosphärischem Druck befindliche Gas in der Turbine in einen Unterdruck, wie beispielsweise 0,2 bis 0,4 bar, entspannt, und anschließend im Verdichter wieder auf Umgebungsdruck (atmosphärischem Druck) verdichtet. Diese Verfahrensvariante hat den Vorteil, dass der Druck in der Brennkammer und der Brennstoffzelle ungefähr auf Atmosphärenniveau, bzw. bis maximal 2 bar gehalten werden können, welches zu einer deutlich einfacheren Auslegung dieser Verfahrenskomponenten führt.

Als vorteilhaft hat sich auch herausgestellt, das Abgas aus der Turbine durch einen Wärmetauscher (Rekuperator) zu leiten, in dem die Temperatur des Abgases reduziert wird, und die entnommene Wärmemenge zur Vorwärmung der Zuluft für die Brennstoffzelle verwendet wird. Unter einem Rekuperator ist ein Wärmetauscher im Abgasstrom zur Rückgewinnung von Abwärme zu verstehen. Damit wird vorteilhaft der Wirkungsgrad des Verfahrens erhöht, da eine externe Vorwärmung der Zuluft für die Brennstoffzelle entfällt.

Weiterhin ist es bei dem erfindungsgemäßen Verfahren von Vorteil, wenn der im Rekuperator vorgewärmte Luftstrom in zwei Teilmengen aufgeteilt wird, von denen ein Teil der Brennstoffzelle als Zuluft zugeführt wird, und ein anderer Teil dem Abgasstrom der Brennstoffzelle zugeleitet wird. Auf diese Weise kann insbesondere die Zusammensetzung der Luft in der Gasturbinenbrennkammer bezüglich des Restbrennstoffanteils variiert werden.

Die Vorteile des erfindungsgemäßen Verfahrens lassen sich wie folgt zusammenfassen:
- Die Gasturbine wärmt die Verbrennungsluft mittels Rekuperator soweit vor, dass sie unmittelbar der Brennstoffzelle zugeführt werden kann. Es entfällt eine zusätzliche Erwärmung der Luft vor Eintritt in die Brennstoffzelle.
- Die Luft steht unter Atmosphärendruck, d. h. der Zellstapel muss nicht druckfest ausgeführt werden. Sollte der Druck in der Brennstoffzelle und in den Brennkammern geringfügig höher sein als 1 bar, z. B. 1,5 oder 2 bar, dann wird die Luft bereits vor dem Eintritt in den Rekuperator auf den gewünschten Druck vorverdichtet.
- Die Gasturbinenbrennkammer kann durch Änderung der Bypassluft (7) einem variablen Restbrennstoffanteil im Abgas der Brennstoffzelle auf einfache Weise angepasst werden.
- Das gesamte System kann auch bei kleinen Anlagengrößen sehr hohe Wirkungsgrade, z. B. > 70 %, erreichen.

In einer weiteren Ausgestaltung des Verfahrens kann die Wärme aus dem Abhitzekessel zur Erzeugung von Sattdampf von 1 bar verwendet werden. Dieser wird in die Brennkammer eingespritzt. So erhöht sich der Massenstrom in der Turbine. Im gleichen Verhältnis erhöht sich die Turbinenleistung. Durch die Abkühlung des Abgases vor Eintritt in den Verdichter wird der vorher eingespritzte Wasserdampf wieder ausgefällt und der Verdichter nicht mit dem zusätzlichen Massenstrom belastet. Mit dieser Variante lässt sich die elektrische Leistung der Gasturbine und damit die Leistung der Gesamtanlage steigern.

### Spezieller Beschreibungsteil

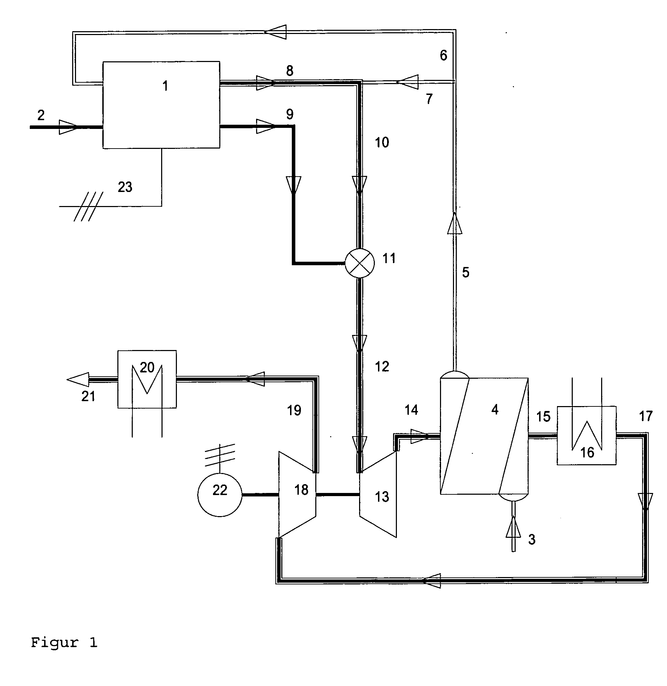

Nachfolgend wird der Gegenstand der Erfindung anhand eines Ausführungsbeispiels in Form einer Figur näher erläutert, ohne dass der Gegenstand der Erfindung dadurch beschränkt wird.
In der Figur bedeuten:
- 1: Brennstoffzelle
- 2: Brennstoff
- 3: Außenlufteintritt
- 4: Rekuperator
- 5: Vorgewärmte Luft
- 6: Zuluft zur Brennstoffzelle
- 7: Bypassluft
- 8: Abgas aus der Brennstoffzelle
- 9: Restbrennstoff aus der Brennstoffzelle
- 10: Mischgas vor der Brennkammer
- 11: Brennkammer
- 12: Abgas aus der Brennkammer
- 13: Turbine
- 14: Abgas aus der Brennkammer
- 15: Abgas aus dem Rekuperator
- 16: Abgaskühler
- 17: Abgas am Verdichtereintritt
- 18: Verdichter
- 19: im Verdichter auf Umgebungsdruck verdichtetes Abgas
- 20: Abhitzekessel
- 21: Abgasaustritt in die Umgebung

Das Grundschema des neuen Verfahrens ist in der Figur dargestellt. Die Außenluft (3) tritt in den Rekuperator (4) ein. Dort wird sie von 15 auf z. B. 600 °c (5) erwärmt. Vor Eintritt in die Brennstoffzelle (1) wird ein Bypassstrom (7) abgezweigt. Der Restluftstrom (6) tritt parallel zum Brennstoff (2) in die Brennstoffzelle ein. Dort wird ein Teil des Luftsauerstoffs für die elektrochemische Reaktion des Brennstoffs verbraucht. Der restliche Luftsauerstoff tritt zusammen mit dem Anodenabgas aus der Brennstoffzelle aus. Anodenabgas (9) mit Überschussluft aus der Brennstoffzelle und/oder Kathodenabgas (8) mit überschüssigem restlichen Luftsauerstoff werden mit der Bypassluft vermischt (10) und treten in die Brennkammer (11) ein.

Mit dem Restbrennstoff aus der Brennstoffzelle, welches im Anodenabgas (9) enthalten ist, wird die Luft in der Brennkammer auf die Temperatur erwärmt, die für die Turbine am Eintritt benötigt wird (12), z. B. 930 °C. Der Systemdruck in allen vorbeschriebenen Phasen des Prozesses entspricht in etwa dem Umgebungsdruck.

In der Turbine (13) wird das heiße Abgas aus der Brennkammer von ca. 1 bar auf z. B. 0,33 bar entspannt. Dabei kühlt sich das Gas auf ca. 660 °C ab. Es durchströmt den Rekuperator und kühlt sich auf eine Austrittstemperatur von ca. 80 °C ab (17). Die dabei abgegebene Wärme dient der Temperaturerhöhung der Außenluft (von 15 auf ca. 600 °C). Um das Abgas so weit wie möglich abzukühlen, durchläuft es einen weiteren Wärmetauscher/Kühler (16), so dass sich für das Abgas (17) beispielsweise Temperaturen um 30 °C einstellen. Mit dieser Temperatur wird das Abgas bei einem Druck von ca. 0,3 bar vom Verdichter (18) angesaugt und auf Umgebungsdruck verdichtet (19). Dabei erwärmt es sich auf ca. 180 °C. Bevor es in die Umgebung entlassen wird, wird das Abgas in einem Abhitzekessel (20) abgekühlt werden. Die dabei gewonnene Wärme kann dann vorteilhaft zur Versorgung einer Heizanlage eingesetzt werden.

## Patentansprüche

1. Verfahren zur Erzeugung von elektrischer Energie in einer Vorrichtung bestehend aus einer Hochtemperaturbrennstoffzelle (1) und einer Gasturbine (13), **dadurch gekennzeichnet, dass** in der der Gasturbine (13) vorgeschalteten Brennkammer (11) Umgebungsdruck oder ein gegenüber dem Umgebungsdruck leicht erhöhter Druck bis 2 bar eingestellt wird.

2. Verfahren nach Anspruch 1, **dadurch gekennzeichnet, dass** das Abgas in der Gasturbine (13) in einen Unterdruck entspannt wird, und der Verdichter (18) das Gas aus dem Unterdruck ansaugt und es auf Umgebungsdruck oder auf einen gegenüber dem Umgebungsdruck leicht erhöhten Druck von 1 bis 1,5 bar verdichtet.

3. Verfahren nach einem der Ansprüche 1 und 2, **dadurch gekennzeichnet, dass** das Turbinenabgas in einem Rekuperator (4) abgekühlt wird und die dabei freigewordene Wärme zur Vorwärmung der Zuluft zur Brennstoffzelle (11) verwendet wird.

4. Verfahren nach einem der Ansprüche 1 bis 3, **dadurch gekennzeichnet, dass** die im Rekuperator (4) vorgewärmte Luft in zwei Teilmengen aufgeteilt wird, von denen der eine der Brennstoffzelle (1) zugeführt wird, während der andere dem die Brennstoffzelle entströmenden Abgas beigemischt wird.

5. Verfahren nach einem der Ansprüche 1 bis 4, **dadurch gekennzeichnet, dass** in der Brennkammer (11) der Gasturbine die Verbrennung des nicht verbrannten Anteils an dem der Brennstoffzelle (1) zugeführten Brennstoff erfolgt.

6. Verfahren nach einem der Ansprüche 1 bis 5, **dadurch gekennzeichnet, dass** das im Verdichter (18) komprimierte und erwärmte Abgas in einem Abhitzekessel (20) abgekühlt wird und die dabei gewonnene Heizwärme zur Deckung eines externen Heizenergiebedarfs verwendet wird.

7. Verfahren nach einem der Ansprüche 1 bis 6, **dadurch gekennzeichnet, dass** die im Abhitzekessel (20) gewonnene Wärme zur Erzeugung von überhitztem Dampf verwendet wird, der in die Brennkammer (11) der Gasturbine eingespritzt wird.

8. Verfahren nach einem der Ansprüche 1 bis 7, **dadurch gekennzeichnet, dass** die in den Rekuperator (4) eintretende Luft zuvor auf maximal 2 bar vorverdichtet wird.

9. Verfahren nach einem der Ansprüche 1 bis 7, **dadurch gekennzeichnet, dass** in der der Gasturbine (13) vorgeschalteten Brennkammer (11) Umgebungsdruck eingestellt wird.

10. Vorrichtung zur Durchführung des Verfahrens nach einem der Ansprüche 1 bis 7, umfassend Brennstoffzelle (1), mit einer Luftzuführungsleitung und wenigstens einer Abgasleitung, einer der Brennstoffzelle nachgeschalteten Gasturbine (13) mit Brennkammer (11) und Verdichter (18) sowie einem der Gasturbine nachgeschalteten Rekuperator (4) zur Vorwärmung der der Brennstoffzelle zuzuführenden Luft, **dadurch gekennzeichnet, dass** die zwischen Rekuperator und Brennstoffzelle angeordnete Luftzuführungsleitung einen Abzweig zu wenigstens einer der Abgasleitungen der Brennstoffzelle aufweist.

11. Vorrichtung nach vorhergehendem Anspruch 10, bei der dem Rekuperator (4) und/oder dem Verdichter (18) der Gasturbine ein Wärmetauscher (16, 20) nachgeschaltet ist.

12. Vorrichtung nach vorhergehendem Anspruch 10 oder 11, bei der die in das dem Rekuperator (4) und/oder dem Verdichter (18) der Gasturbine ein Wärmetauscher (16, 20) nachgeschaltet ist.
